# EUROPÄISCHE PATENTSCHRIFT

(11) **EP 3 206 940 B1**
(45) Veröffentlichungstag und Bekanntmachung des Hinweises auf die Patenterteilung: **16.06.2021**
(21) Anmeldenummer: 15777877.0
(22) Anmeldetag: 06.10.2015
(51) Int. Cl.: B62D 61/10, B62B 5/00

(54) **FAHRZEUG MIT AUFGEHÄNGTEM UND DREHBAR GELAGERTEM GESTELL**
VEHICLE WITH A SUSPENDED AND ROTATABLY MOUNTED FRAME
VÉHICULE PRÉSENTANT UN CHÂSSIS SUSPENDU ET LOGÉ DE MANIÈRE TOURNANTE

(30) Priorität: 17.10.2014 DE 102014015317
(43) Veröffentlichungstag der Anmeldung: 23.08.2017
(73) Patentinhaber: SEW-EURODRIVE GmbH & Co. KG, 76646 Bruchsal (DE)
(72) Erfinder: SCHÖNUNG, Frank, 76676 Graben-Neudorf (DE); ANGST, Michael, 76131 Karlsruhe (DE); KÖDDERITZSCH, Jan-Patrick, 76133 Karlsruhe (DE)
(86) Internationale Anmeldenummer: PCT/EP2015/001959
(87) Internationale Veröffentlichungsnummer: WO 2016/058675

(56) Entgegenhaltungen:
- EP-A1- 2 168 847
- FR-A1- 2 735 019
- US-A- 5 083 625

## Beschreibung

Die Erfindung betrifft ein Fahrzeug mit Gestell

Es ist allgemein bekannt, dass Fahrzeuge ein Gestell aufweisen, an welchem Antriebsräder und/oder Lenkrollen drehbar gelagert aufgenommen sind.

**Aus der** EP 2 168 847 A1 **ist als nächstliegender Stand der Technik ein automatisch geführtes Fahrzeug mit Gestell bekannt,**
**wobei ein Aufnahmeteil zur Aufnahme einer Last vorgesehen ist,**
**wobei ein Druckstab mittels eines ersten Drehlagers am Aufnahmeteil drehbar gelagert ist und mittels eines zweiten, vom ersten Drehlager beabstandeten zweiten Drehlagers an einer Schwinge gelagert ist, die mittels eines dritten Drehlagers am Gestell gelagert ist,**
**wobei das dritte Drehlager vom ersten Drehlager und vom zweiten Drehlager beabstandet ist,**
**wobei eine Antriebsräder aufweisende Antriebseinheit mittels eines vierten Drehlagers an einem Abschnitt der Schwinge drehbar gelagert ist, die über das vierte Drehlager am Schwingenrahmenteil gelagert ist,**
**wobei von einem Boden abstützbare Lenkrollen am Gestell angeordnet sind,**
**wobei die Antriebsräder der Antriebseinheit von einem Elektromotor der Antriebseinheit antreibbar sind,**
**wobei die Antriebsräder jeweils am Boden abstützbar sind,**
**wobei der Abschnitt der Schwinge mittels eines fünften Drehlagers drehbar zur Schwinge ist.**

**Aus der** US 5 083 625 A **ist ein manövrierbares Mobilteil bekannt.**

Der Erfindung liegt daher die Aufgabe zugrunde, ein Fahrzeug weiterzubilden, wobei die von den Antriebsrädern, also von den angetriebenen Rädern, zum Boden eingeleitete Antriebskraft sicher übertragbar sein soll.

Erfindungsgemäß wird die Aufgabe bei dem Fahrzeug nach den in Anspruch 1 angegebenen Merkmalen gelöst.

Wichtige Merkmale der Erfindung bei dem Fahrzeug mit Gestell sind, dass ein Aufnahmeteil zur Aufnahme einer Last mittels einer am Gestell angeordneten Linearführung geführt ist,
wobei ein Druckstab mittels eines ersten Drehlagers am Aufnahmeteil drehbar gelagert ist und mittels eines zweiten, vom ersten Drehlager beabstandeten zweiten Drehlagers an einer Schwinge, insbesondere Schwingenrahmenteil der Schwinge, gelagert ist, die mittels eines dritten Drehlagers am Gestell gelagert ist, insbesondere so dass Gewichtskraft des Aufnahmeteils samt der vom Aufnahmeteil aufgenommenen Last an die Schwinge, insbesondere an das Schwingenrahmenteil, geleitet wird,
wobei das dritte Drehlager vom ersten Drehlager und vom zweiten Drehlager beabstandet ist,
wobei die Drehachsen des ersten, zweiten und dritten Drehlagers zueinander parallel ausgerichtet sind,
wobei eine Antriebsräder aufweisende Antriebseinheit mittels eines vierten Drehlagers an einem Abschnitt, insbesondere Drehabschnitt, der Schwinge drehbar gelagert ist, insbesondere mittels einer Pendelachse, die über das vierte Drehlager am Schwingenrahmenteil gelagert ist,
insbesondere wobei die Drehachsen des ersten, zweiten und dritten Drehlagers horizontal ausgerichtet sind, insbesondere also parallel zu derjenigen Ebene ausgerichtet sind, welche eine gemeinsame Tangentialebene der Lenkrollen, insbesondere der vorderen und hinteren Lenkrollen, insbesondere aller Lenkrollen, des Fahrzeugs ist.

Von Vorteil ist dabei, dass die Antriebseinheit sozusagen kardanisch aufgehängt ist und sich somit den Bodenunebenheiten entsprechend ausrichtet. Außerdem wird die Antriebseinheit, insbesondere also werden die Antriebsräder, mit einer im Wesentlichen konstanten Anpresskraft an den Boden angepresst. Somit ist das Vorhandensein einer im Wesentlichen konstanten Normalkraft gesichert und daher auch die Antriebskraft sicher bereitstellbar.

Bei einer vorteilhaften Ausgestaltung ist der Abschnitt, insbesondere Drehabschnitt, der Schwinge mittels eines fünften Drehlagers drehbar zur insbesondere restlichen Schwinge, also zum Schwingenrahmenteil, insbesondere um einen Lenkwinkel drehbar. Von Vorteil ist dabei, dass die Antriebseinheit zugleich das Fahrzeug lenkt. Denn durch das Verdrehen um die Drehachse des fünften Drehlagers werden die Antriebsräder entsprechend dem vorgegebenen Lenkwinkel ausgerichtet und das Fahrzeug entsprechend gelenkt.

Bei einer vorteilhaften Ausgestaltung ist die Drehachse des fünften Drehlagers senkrecht zur Drehachse des vierten Drehlagers ausgerichtet,
wobei die Drehachse des fünften Drehlagers senkrecht ausgerichtet ist zur Drehachse des dritten Drehlagers,
insbesondere wobei die Radachsen der Antriebsräder senkrecht ausgerichtet sind zur Drehachse des vierten Drehlagers. Von Vorteil ist dabei, dass die fünfte Drehachse vertikal und die erste, zweite und dritte Drehachse horizontal ausgerichtet sind, insbesondere unter Vernachlässigung der Bodenunebenheiten. Die Drehachse des vierten Drehlagers ist dann senkrecht zu den Drehachsen des ersten, zweiten, dritten und fünften Drehlagers ausgerichtet.

Bei einer vorteilhaften Ausgestaltung sind von einem Boden abstützbare Lenkrollen, insbesondere am Boden abrollbare Lenkrollen, am Gestell angeordnet. Von Vorteil ist dabei, dass der größte Anteil der Gewichtskraft über die Lenkrollen dem Boden zuleitbar ist. Trotzdem steht ein genügend großer Anteil der Gewichtskraft zum Anpressen der Antriebsräder an den Boden zur Verfügung.

Bei einer vorteilhaften Ausgestaltung sind die Antriebsräder der Antriebseinheit von einem Elektromotor der Antriebseinheit antreibbar,
wobei die Antriebsräder jeweils am Boden abstützbar sind, insbesondere abrollbar sind. Von Vorteil ist dabei, dass durch den über die Antriebsräder dem Boden zugeleiteten Gewichtskraftanteil ein gleichmäßiges Anpressen der Antriebsräder bewirkbar ist.

Bei einer vorteilhaften Ausgestaltung ist das zweite Drehlager von der Drehachse des fünften Drehlagers beabstandet,
insbesondere wobei das zweite Drehlager am Schwingenrahmenteil angeordnet ist. Von Vorteil ist dabei, dass die Schwinge somit als Hebelarm wirksam ist und ein Einleiten eines Gewichtskraftanteils an eine Position des Hebelarms somit ein Vorgeben der die Antriebsräder an den Boden anpressenden Kraft ermöglicht.

Bei einer vorteilhaften Ausgestaltung ist die Drehachse des fünften Drehlagers weiter entfernt von der Drehachse des dritten Drehlagers als die Drehachse des zweiten Drehlagers. Von Vorteil ist dabei, dass die Schwinge als Hebelarm wirksam ist und somit ein Anteil an der Gewichtskraft vorgebbar ist.

Bei einer vorteilhaften Ausgestaltung ist die Linearführung senkrecht zur ersten, zweiten und/oder dritten Drehachse und/oder vertikal ausgerichtet,
insbesondere wobei das Aufnahmeteil samt der vom Aufnahmeteil aufgenommenen Last hebbar oder senkbar ist. Von Vorteil ist dabei, dass das Aufnahmeteil durch die Linearführung nur geführt ist, aber die Gewichtskraft über die Druckstange abgeleitet wird.

Bei einer vorteilhaften Ausgestaltung weisen die in Fahrrichtung vorderen Lenkrollen einen größeren Abstand auf zur Antriebseinheit, insbesondere zum Schwerpunkt der Antriebseinheit, also die hinteren Lenkrollen. Von Vorteil ist dabei, dass die über die vorderen oder hinteren Lenkrollen dem Boden zugeleiteten Kraftanteile vorgebbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße Antriebsanordnung eines auf einem Boden verfahrbaren Fahrzeugs schematisch gezeigt, die kardanisch aufgehängte Antriebsräder aufweist, wobei die Gewichtskraft einer vom Fahrzeug aufnehmbaren Last über einen Druckstab 6 ins Kardangelenk eingeleitet wird.
In der Figur 2 ist eine Draufsicht auf die Unterseite des Fahrzeugs gezeigt.
In der Figur 3 ist die zugehörige Kraftberechnung gezeigt.

Der Boden darf Unebenheiten aufweisen, solange diese unterhalb einer zulässigen Stärke auftreten.

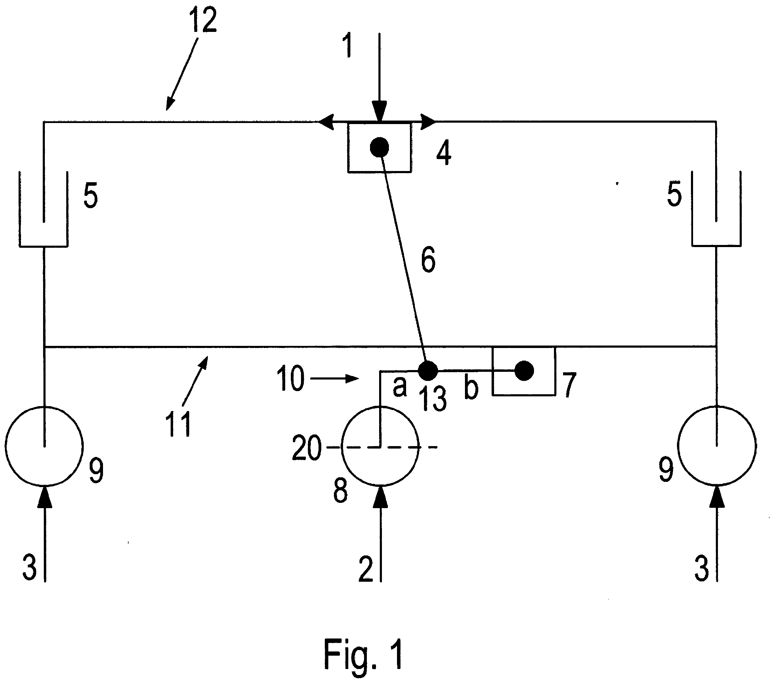

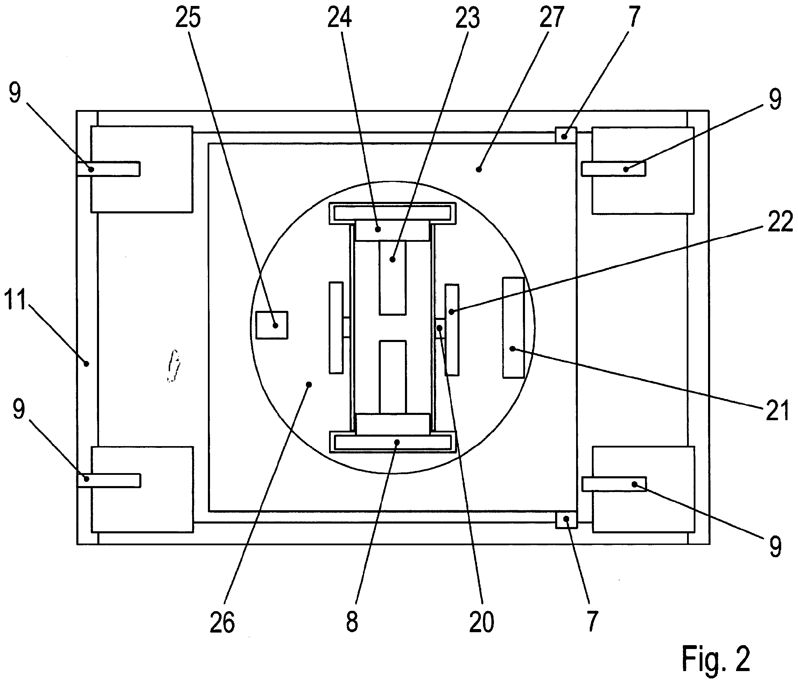

Wie in Figur 1 und 2 dargestellt, weist das Fahrzeug ein Gestell 11, insbesondere Fahrgestell, auf, an welchem Lenkrollen 9 gelagert sind. Am Gestell 11 sind Linearführungen 5 angeordnet, welche ein Aufnahmeteil 12 linear führen. Somit ist das Aufnahmeteil 12 auf das Gestell 11 hin oder von diesem weg bewegbar. Vorzugsweise sind die Linearführungen 5 vertikal gerichtet und somit das Aufnahmeteil 12 vertikal bewegbar, also hebbar oder senkbar.

An der Oberseite des Aufnahmeteil 12 ist eine Last aufnehmbar. Die Gewichtskraft 1 der Last und des Aufnahmeteils 12 wirkt in Gravitationsrichtung.

Am Aufnahmeteil 12 ist ein Druckstab 6 mittels eines Drehlagers 4 verbunden, insbesondere also gelagert.

Am Gestell 11 ist eine Schwinge 10 mittels eines weiteren Drehlagers 7 verbunden, insbesondere also gelagert.

Der Druckstab 6 ist mit seinem vom Drehlager 4 abgewandten Ende mittels eines Drehlagers 13 an einer Position der Schwinge 10, insbesondere des Schwingenrahmenteils 27, verbunden, insbesondere also gelagert, wobei die Position den Abstand b zum Drehlager 7 aufweist.

An einem Drehabschnitt 26 der Schwinge 10 sind von einem Getriebemotor angetriebene Antriebsräder 8 gelagert, wobei die senkrechte Projektion des Mittelpunkts der Antriebsräder 8 auf die Schwinge 10, welche idealisiert als ebenes Teil beschreibbar ist, weist den Abstand a + b von dem Drehlager 7 auf und den Abstand a zum Drehlager 13.

Auf diese Weise wird ein Teil der Gewichtskraft 1 über die Antriebsräder 8 und ein anderer Teil der Gewichtskraft 1 über die Lenkrollen 9 dem Boden zugeleitet. Entsprechend wirkt eine Gegenkraft 2 vom Boden auf die Antriebsräder 8 und eine Gegenkraft 3 vom Boden auf die Lenkrollen 9.

Die Drehachsen der Drehlager 4, 7 und 13 sind parallel und horizontal angeordnet, also im Wesentlichen auch parallel zum Boden, wenn Bodenunebenheiten vernachlässigt werden.

Der Getriebemotor, welcher ein jeweiliges Antriebsrad 8 antreibt, weist einen Elektromotor 23 auf, der ein Getriebe 24 antreibt, welches das jeweilige Antriebsrad 8 antreibt.

Die von Getriebemotoren angetriebenen Antriebsräder sind als Einheit ausgeführt, die mittels einer Pendelachse 20 drehbar gelagert ist zu einem Drehabschnitt 26 der Schwinge 10. Dabei ist die Pendelachse 20 horizontal ausgerichtet und senkrecht zu den Drehachsen der Drehlager 4, 7 und 13, wenn die Fahrtrichtung geradeaus ist, also die Achsen der Antriebsräder 8 parallel zur Drehachse des Drehlagers 7 ausgerichtet ist und somit der Lenkwinkel Null Grad beträgt. Der Drehabschnitt 26 ist verdrehbar zum Schwingenrahmenteil 27 der Schwinge 10 um den Lenkwinkel, wobei die zugehörige Drehachse senkrecht zur Drehachse des Drehlagers 7 ausgerichtet ist und im Wesentlichen parallel zum Boden ist, wenn Bodenunebenheiten vernachlässigt werden.

An dem Drehabschnitt 26 ist außerdem noch eine Spurführungsantenne 21 angeordnet, so dass die Antriebsräder entsprechend der im Boden verlegten Spurführung, insbesondere eine langgestreckte mit Wechselstrom beaufschlagte elektrische Leitung, ausrichtbar sind, also der Lenkwinkel derart stellbar ist, dass die Spurführungsantenne 21 auf die Spurführung hin positioniert wird.

Darüber hinaus ist an dem Drehabschnitt auch ein Transponder-Lesegerät 25 angeordnet, mit welchem ein jeweiliger am oder im Boden verlegter Transponder ablesbar ist und somit die Position des Fahrzeugs detektierbar ist.

Am Drehabschnitt 26 ist ein Drehlager 22 für die Pendelachse 20 angeordnet, so dass das Drehlager 22 in dem Schwingenrahmenteil 27 der Schwinge 10 aufgenommen ist.

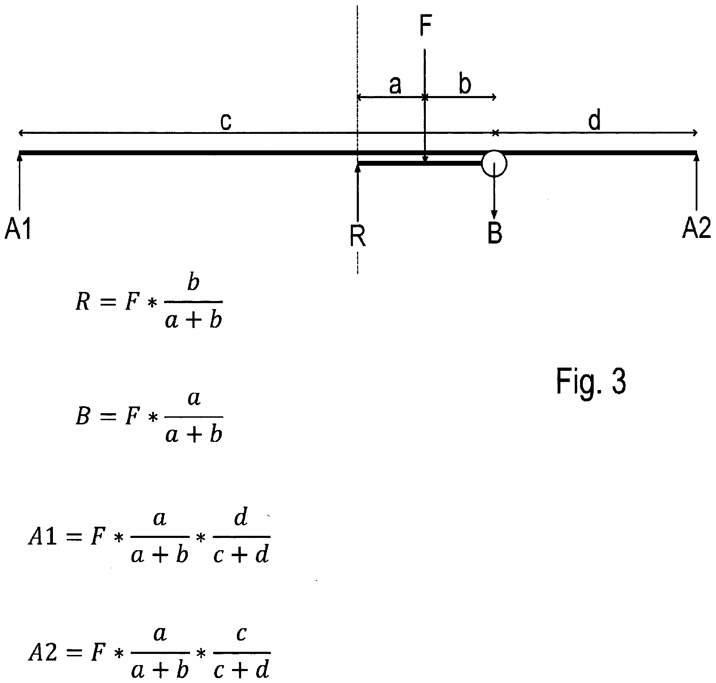

Wie in Figur 3 gezeigt, sind die Kräfte A1, A2, R, B in Abhängigkeit von der Gewichtskraft F und den Abständen a, b, c, d bestimmbar. Die entsprechenden Formeln sind ebenfalls wie auch die schematischen Hebelarmverhältnisse darstellende Skizze der für die Kraftberechnung wesentlichen Einflussgrößen in Figur 3 gezeigt.

Dabei ist der Abstand c der Abstand einer vorderen Lenkrolle 9 zum Druckstab 6, der Abstand d der Abstand einer hinteren Lenkrolle 9 zum Druckstab 6.

Dir Kraft A1 wirkt auf die vordere Lenkrolle 9, die Kraft A2 wirkt auf die hintere Lenkrolle 9. Die Kraft F ist die Gewichtskraft der Last, eingeleitet auf das Schwingenrahmenteil 27 der Schwinge 10 und somit auf die Schwinge 10 mittels Druckstab 6. Die Kraft R ist die Kraft, welche vom Boden auf die Antriebsräder 8 wirkt. Die Kraft B ist die Kraft, welche zum Boden gerichtet, auf das Drehlager 7 wirkt.

Wesentlich ist also bei dem erfindungsgemäßen Ausführungsbeispiel, dass die Gewichtskraft 1, also Kraft F, eingeleitet wird an eine Schwinge 10, welche über ein Drehlager 7 am Gestell 11 gelagert ist und die Schwinge 10 einen Drehabschnitt 26 aufweist, welcher um einen Lenkwinkel verdrehbar ist, insbesondere zum Schwingenrahmenteil 27 der Schwinge 10, und ein Lager 22 für eine Pendelachse 20 aufweist, wobei die aus über Getriebemotoren angetriebenen Antriebsrädern gebildete Antriebseinheit mittels der Pendelachse drehbar gelagert ist am Drehabschnitt 26 der Schwinge 10.

Auf diese Weise ist also durch Dimensionierung der geometrischen Größen, insbesondere der Abstände a und b, die Anpresskraft der Antriebsräder 8 gegen den Boden vorgebbar.

Bei Unebenheiten des Bodens insbesondere unterhalb einer kritischen Schwelle werden somit die Antriebsräder mit der nach Figur 3 bestimmbaren Anpresskraft angedrückt, da die Bodenunebenheit im Wesentlichen keinen Einfluss hat auf die Abstände a und b. Somit ist ein stetiges, im Wesentlichen gleichförmig starkes Anpressen der Antriebsräder 8 an den Boden erreichbar.

Bei einem Fahrzeug, welches Lenkrollen 9 und zusätzliche Antriebsräder 8 aufweist, tritt eine Überbestimmtheit auf und es ist abhängig von Fertigungstoleranzen des Fahrzeugs sowie Bodenunebenheiten, welche bodengerichtete Anpresskraft auf die Antriebsräder 8 wirkt. Durch die erfindungsgemäße Einleitung der Gewichtskraft wird aber eine Anpresskraft definiert und somit ein im Wesentliches gleichförmiges Anpressen der Antriebsräder an den Boden während der Fahrt, also auch bei veränderlichen Bodenunebenheiten, erreicht.

Bei der vorliegenden Erfindung bezieht sich das Wort "horizontal" auf diejenige Ebene, welche gleichzeitig Tangentialebene aller Lenkrollen ist. Wenn also der Boden eine ideale Ebene ist, also ohne Bodenunebenheiten, stellt er diese Tangentialebene dar.

Die vertikale Richtung ist senkrecht zur horizontalen Richtung ausgerichtet, entspricht also der Gravitationsrichtung.

Das Drehlager 4 ist auch als erstes Drehlager bezeichenbar, das Drehlager 13 als zweites Drehlager und das Drehlager 7 als drittes Drehlager. Das Drehlager 22 ist als viertes Drehlager und das Drehlager des Abschnitts 26 als fünftes Drehlager.

### zugszeichenliste

1 Gewichtskraft der Last
2 Kraft, vom Boden auf die Antriebsräder 8 wirkend
3 Kraft, vom Boden auf die Lenkrollen 9 wirkend
4 Drehlager
5 Linearführung, insbesondere vertikal gerichtete Linearführung
6 Druckstab
7 Drehlager
8 Antriebsrad
9 Lenkrolle
10 Schwinge
11 Gestell
12 Aufnahmeteil
13 Drehlager
20 Pendelachse
21 Spurführungsantenne
22 in der Schwinge 10 aufgenommenes Lager für Pendelachse 20
23 Elektromotor
24 Getriebe
25 Transponder-Lesegerät
26 Drehabschnitt der Schwinge 10
27 Schwingenrahmenteil
a Hebelarm
b Hebelarm
c Abstand der vorderen Lenkrolle 9 zum Druckstab
d Abstand der hinteren Lenkrolle 9 zum Druckstab
A1 Kraft auf vordere Lenkrolle 9
A2 Kraft auf hintere Lenkrolle 9
F Gewichtskraft der Last, eingeleitet auf Schwinge 10 mittels Druckstab 6
R Kraft, vom Boden auf die Antriebsräder 8 wirkend
B Kraft, zum Boden gerichtet, auf das Drehlager 7 wirkend

## Patentansprüche

1. Fahrzeug mit Gestell (11),
wobei ein Aufnahmeteil (12) zur Aufnahme einer Last mittels am Gestell (11) angeordneten **Linearführungen** (5) geführt ist,
**welche das Aufnahmeteil (12) linear führen, so dass das Aufnahmeteil (12) auf das Gestell (11) hin oder von diesem weg bewegbar ist,**
wobei ein Druckstab mittels eines ersten Drehlagers (4) am Aufnahmeteil (12) drehbar gelagert ist und mittels eines zweiten, vom ersten Drehlager (4) beabstandeten zweiten Drehlagers (13) an einem **Schwingenrahmenteil (27) einer Schwinge (10)** gelagert ist, die mittels eines dritten Drehlagers (7) am Gestell gelagert ist,
wobei das dritte Drehlager (7) vom ersten Drehlager (4) und vom zweiten Drehlager (13) beabstandet ist,
wobei die Drehachsen des ersten, zweiten und dritten Drehlagers zueinander parallel ausgerichtet sind,
wobei eine Antriebsräder aufweisende Antriebseinheit mittels eines vierten Drehlagers (22) an einem **als Drehabschnitt (26) fungierenden** Abschnitt, der Schwinge (10) **mittels einer Pendelachse drehbar gelagert ist,** die über das vierte Drehlager (22) am Schwingenrahmenteil (27) gelagert ist,
wobei die Drehachsen des ersten, zweiten und dritten Drehlagers horizontal ausgerichtet sind **und** parallel zu derjenigen Ebene ausgerichtet sind, welche eine gemeinsame Tangentialebene der Lenkrollen, des Fahrzeugs ist,
**wobei von einem Boden abstützbare und** abrollbare Lenkrollen am **Gestell angeordnet sind,**
**wobei die Antriebsräder der Antriebseinheit von einem Elektromotor der Antriebseinheit antreibbar sind,**
**wobei die Antriebsräder jeweils am Boden abstützbar und abrollbar sind,**
**wobei die in Fahrrichtung vorderen Lenkrollen einen größeren Abstand aufweisen zum Schwerpunkt der Antriebseinheit als die hinteren Lenkrollen,**
**wobei der Abschnitt der Schwinge (10) mittels eines fünften Drehlagers drehbar** zum **Schwingenrahmenteil (27)** ist.

2. Fahrzeug nach Anspruch 1,
**dadurch gekennzeichnet, dass**
die Drehachse des fünften Drehlagers senkrecht zur Drehachse (20) des vierten Drehlagers (22) ausgerichtet ist,
wobei die Drehachse des fünften Drehlagers senkrecht ausgerichtet ist zur Drehachse des dritten Drehlagers (7),
wobei die Radachsen der Antriebsräder senkrecht ausgerichtet sind zur Drehachse (20) des vierten Drehlagers (22).

3. Fahrzeug nach mindestens einem der vorangegangenen Ansprüche,
**dadurch gekennzeichnet, dass**
das zweite Drehlager (13) von der Drehachse des fünften Drehlagers beabstandet ist,
wobei das zweite Drehlager (13) am Schwingenrahmenteil (27) angeordnet ist.

4. Fahrzeug nach mindestens einem der vorangegangenen Ansprüche,
**dadurch gekennzeichnet, dass**
die Drehachse des fünften Drehlagers weiter entfernt ist von der Drehachse des dritten Drehlagers (7) als die Drehachse des zweiten Drehlagers (13).

5. Fahrzeug nach mindestens einem der vorangegangenen Ansprüche,
**dadurch gekennzeichnet, dass**
die Linearführung (5) senkrecht zur ersten, zweiten und/oder dritten Drehachse (4, 7, 13) und/oder vertikal ausgerichtet ist,
wobei das Aufnahmeteil (12) samt der vom Aufnahmeteil (12) aufgenommenen Last hebbar oder senkbar ist.

## Claims

1. A vehicle having a frame (11),
wherein a receiving part (12) for receiving a load is guided by means of linear guides (5) arranged on the frame (11),
which linear guides (5) linearly guide the receiving part (12), so that the receiving part (12) is movable toward or away from the frame (11),
wherein a compression bar is rotatably mounted on the receiving part (12) by means of a first pivot bearing (4) and is mounted on a rocker framework part (27) of a rocker (10) by means of a second pivot bearing (13) spaced apart from the first pivot bearing (4), which rocker is mounted on the frame by means of a third pivot bearing (7),
wherein the third pivot bearing (7) is spaced apart from the first pivot bearing (4) and from the second pivot bearing (13),
wherein the rotational axes of the first, second and third pivot bearing are oriented parallel to one another,
wherein a drive unit having driving wheels is, by means of a fourth pivot bearing (22), rotatably mounted on a portion, acting as a rotary portion (26), of the rocker (10) by means of a swing axle which is mounted on the rocker framework part (27) via the fourth pivot bearing (22), wherein the rotational axes of the first, second and third pivot bearing are oriented horizontally and oriented parallel to that plane which is a common tangential plane of the steering rollers of the vehicle,
wherein steering rollers, supportable by the ground and rollable, are arranged on the frame, wherein the driving wheels of the drive unit are driveable by an electric motor of the drive unit, wherein the driving wheels are each supportable on the ground and rollable thereon, wherein the steering rollers at the front in the direction of travel are at a greater distance from the centre of gravity of the drive unit than the back steering rollers,
wherein the portion of the rocker (10) is rotatable with respect to the rocker framework part (27) by means of a fifth pivot bearing.

2. A vehicle according to claim 1,
**characterised in that**
the rotational axis of the fifth pivot bearing is oriented perpendicularly to the rotational axis (20) of the fourth pivot bearing (22),
wherein the rotational axis of the fifth pivot bearing is oriented perpendicularly to the rotational axis of the third pivot bearing (7),
wherein the wheel axes of the driving wheels are oriented perpendicularly to the rotational axis (20) of the fourth pivot bearing (22).

3. A vehicle according to at least one of the preceding claims,
**characterised in that**
the second pivot bearing (13) is at a distance from the rotational axis of the fifth pivot bearing, wherein the second pivot bearing (13) is arranged on the rocker framework part (27).

4. A vehicle according to at least one of the preceding claims,
**characterised in that**
the rotational axis of the fifth pivot bearing is at a greater distance from the rotational axis of the third pivot bearing (7) than is the rotational axis of the second pivot bearing (13).

5. A vehicle according to at least one of the preceding claims,
**characterised in that**
the linear guide (5) is oriented perpendicularly to the first, second and/or third rotational axis (4, 7, 13) and/or is oriented vertically,
wherein the receiving part (12) together with the load received by the receiving part (12) can be lifted or lowered.

## Revendications

1. Véhicule équipé d'un châssis (11),
une partie réceptrice (12), dédiée à la réception d'une charge, étant guidée au moyen de guides linéaires (5) qui sont implantés sur ledit châssis (11)
et guident linéairement la partie réceptrice (12) de façon telle que ladite partie réceptrice (12) puisse être mue en direction dudit châssis (11), ou à l'écart de ce dernier,
sachant qu'une tige de pression est montée à rotation sur ladite partie réceptrice (12) au moyen d'un premier palier de pivotement (4) et est montée, au moyen d'un deuxième palier de pivotement (13) situé à distance dudit premier palier de pivotement (4), sur une partie d'encadrement (27) d'un bras oscillant (10) monté sur le châssis au moyen d'un troisième palier de pivotement (7),
lequel troisième palier de pivotement (7) est situé à distance du premier palier de pivotement (4) et du deuxième palier de pivotement (13),
les axes de rotation desdits premier, deuxième et troisième paliers de pivotement étant orientés parallèlement les uns aux autres,
sachant qu'une unité d'entraînement, pourvue de roues menantes, est montée à rotation au moyen d'un quatrième palier de pivotement (22), à l'aide d'un essieu pendulaire monté sur la partie d'encadrement (27) du bras oscillant par l'intermédiaire dudit quatrième palier de pivotement (22), sur une région dudit bras oscillant (10) qui remplit la fonction d'une région tournante (26),
lesdits axes de rotation desdits premier, deuxième et troisième paliers de pivotement étant orientés horizontalement, et orientés parallèlement au plan se présentant comme un plan tangentiel commun des roulettes directrices dudit véhicule,
sachant que des roulettes directrices, aptes à rouler et à prendre appui sur un sol, sont installées sur le châssis,
les roues menantes de l'unité d'entraînement pouvant être entraînées par un moteur électrique de ladite unité d'entraînement,
lesquelles roues menantes sont respectivement aptes à rouler et à prendre appui sur le sol, sachant que les roulettes directrices placées à l'avant dans la direction de déplacement sont situées, par rapport au centre de gravité de ladite unité d'entraînement, à une distance supérieure à celle des roulettes directrices placées à l'arrière,
ladite région du bras oscillant (10) étant montée, au moyen d'un cinquième palier de pivotement, avec faculté de rotation par rapport à la partie d'encadrement (27) dudit bras oscillant.

2. Véhicule selon la revendication 1,
**caractérisé par le fait que**
l'axe de rotation du cinquième palier de pivotement est orienté perpendiculairement à l'axe de rotation (20) du quatrième palier de pivotement (22),
ledit axe de rotation du cinquième palier de pivotement étant orienté perpendiculairement à l'axe de rotation du troisième palier de pivotement (7),
les essieux des roues menantes étant orientés perpendiculairement audit axe de rotation (20) du quatrième palier de pivotement (22).

3. Véhicule selon au moins l'une des revendications précédentes,
**caractérisé par le fait que**
le deuxième palier de pivotement (13) est situé à distance de l'axe de rotation du cinquième palier de pivotement,
ledit deuxième palier de pivotement (13) étant implanté sur la partie d'encadrement (27) du bras oscillant.

4. Véhicule selon au moins l'une des revendications précédentes,
**caractérisé par le fait que**
l'axe de rotation du cinquième palier de pivotement est davantage éloigné, de l'axe de rotation du troisième palier de pivotement (7), que l'axe de rotation du deuxième palier de pivotement (13).

5. Véhicule selon au moins l'une des revendications précédentes,
**caractérisé par le fait que**
le guide linéaire (5) est orienté perpendiculairement aux premier, deuxième et/ou troisième axes de rotation (4, 7, 13), et/ou verticalement,
la partie réceptrice (12) pouvant être levée ou abaissée conjointement à la charge reçue par ladite partie réceptrice (12).
